# EUROPEAN PATENT APPLICATION

(11) **EP 1 926 345 A2**
(43) Date of publication of application: **28.05.2008**
(21) Application number: 07121194.0
(22) Date of filing: 21.11.2007
(51) Int. Cl.: H04S 1/00

(54) **Stereophonic sound control apparatus and stereophonic sound control method**

(30) Priority: 22.11.2006 JP 2006315841; 12.10.2007 JP 2007266778
(71) Applicant: MATSUSHITA ELECTRIC INDUSTRIAL CO., LTD, Kadoma-shi, Osaka 571-8501 (JP)
(72) Inventor: Shuichi, Takada c/o Matsushita Electric Industrial Co., Ltd., 2-1-61, Shiromi Chuo-ku Osaka Osaka 540-6207 (JP); Yasushi, Yonamine c/o Matsushita Electric Industrial Co., Ltd., 2-1-61, Shiromi Chuo-ku Osaka Osaka 540-6207 (JP); Tomiyuki, Yamada c/o Matsushita Electric Industrial Co., Ltd., 2-1-61, Shiromi Chuo-ku Osaka Osaka 540-6207 (JP); Shunsaku, Imaki c/o Matsushita Electric Industrial Co., Ltd., 2-1-61, Shiromi Chuo-ku Osaka Osaka 540-6207 (JP)
(74) Representative: Grünecker, Kinkeldey, Stockmair & Schwanhäusser Anwaltssozietät

(57) **Abstract**

A control unit 6 obtains position data from a sensor unit 1 to specify the position of the main body of an apparatus, and also obtains acceleration data from the sensor unit 1 to specify the azimuth along which the main body faces forward. Then, the control unit employs the azimuth data and the position data to calculate distance data and directional data relative to a predesignated or given position, and outputs these data as sound localization data. Based on the sound localization data, a processing unit 7 performs a stereophonic sound process for digital audio data, and generates digital audio data having directivity. A conversion unit 8 converts the digital audio data into analog audio data, and drives loudspeakers 9 and 10 to release stereophonic speech. As a result, using a speech form that is easily understood simply by listening, a direction instruction can be provided for a listener.

## Description

### BACKGROUND OF THE INVENTION

### 1. Field of the invention

The present invention relates to a stereophonic sound control apparatus appropriate for use, for example, for a car navigation system or a mobile phone that includes a navigation function, and a stereophonic sound control method.

### 2. Description of the related art

Conventionally, car navigation systems and mobile phones having navigation functions are separately available apparatuses used to provide position data for users. Generally, GPS (Global Positioning System) receivers are mounted on these apparatuses, and position data obtained using the GPS receivers are presented on display units. Further, since in addition to a GPS receiver an acceleration sensor especially is mounted on a car navigation system, directional data is obtained using the acceleration sensor, and is presented, along with position data, on a display unit.

There is also an apparatus that has a function not only for visually displaying a position or a direction, but for audibly notifying a user of the position or the direction.

On the other hand, there is a procedure that generates sound only near the ears of a user, without the sound being scattered in all directions (see, for example, patent document 1). In patent document 1, the technique disclosed is one whereby, based on the size of the face of a user photographed using a camera, the distance between a mobile terminal and the face of the user is measured, and a filter coefficient corresponding to this distance is read from memory and is designated for use to the filter of a stereophonic sound processor. According to this technique, a sound image, produced on the basis that sound waves will be released by right and left loudspeakers, is localized at a position corresponding to the face of the user. Thus, sound waves released by the right and left loudspeakers converge at the face of the user, without being widely dispersed.
Patent Document 1: JP-A-2006-157558
However, the following problems are present in the above described conventional art.
(a) For an apparatus that presents position data on a display unit screen, since for this purpose a position is displayed on the screen, the display of the position may coexist with other displays, and in such a case, the display of the position will be difficult to identify.
(b) For an apparatus that uses audio to provide directional guidance, intuitive recognition is degraded when directions such as right, left, up and down are read. Further, in order to use audio to provide directional guidance and to enhance intuitive recognition, many loudspeakers would be required, in all directions, through 360 degrees. Thus, the scale of the apparatus would be increased and the cost raised.
(c) An apparatus that provides audio directivity by using stereophonic sounds can generate pseudo sounds in all directions, through 360 degrees, by using only two loudspeakers. However, the present usage thereof is merely for making sounds that are easier to hear, not for easily providing direction instructions (for guidance, recognition, warnings).

To resolve these shortcomings, one objective of the present invention is to provide a stereophonic sound control apparatus that can easily issue, at a low cost, audio instructions for directions, and a stereophonic sound control method.

This objective can be achieved by the following configuration or method.
(1) A stereophonic sound control apparatus comprises:
   an audio data acquisition unit for obtaining audio data;
   a position data acquisition unit for obtaining position data;
   a controller for employing changes in position data, obtained by the position data acquisition unit, to specify an azimuth for a main body of the apparatus, for employing azimuth data and the position data to obtain distance data and directional data, indicating a distance and a direction to a predesignated position or a given position, and for outputting these data as localization data for sound; and
   a processor for employing the localization data to perform a stereophonic sound process for the audio data obtained by the audio data acquisition unit.
   According to this configuration, since the azimuth data and the position data are employed to obtain the distance data and the directional data for the predesignated or given position, and since these data are output as sound localization data, an audio instruction for directions can be issued separately from visual data.
(2) The stereophonic sound control apparatus described in (1) further comprises:
   an acceleration detector for detecting acceleration,
   wherein the controller obtains acceleration data from the acceleration detector and determines an azimuth along which the main body of the apparatus has moved or is currently moving, employs the azimuth data and the position data obtained through a determination performed to obtain distance data and directional data indicating a distance and a direction to a predesignated position or a given position, and outputs these data as sound localization data.
   According to this arrangement, since the acceleration data is obtained from the acceleration detector and the azimuth along which the main body of the apparatus has moved or is currently moving is determined, accurate azimuth data can be obtained.
(3) The stereophonic sound control apparatus described in (1) comprises a bearing detector for detecting a directional bearing,
   wherein the controller obtains bearing data from the bearing detector to determine data for an azimuth along which the main body of the apparatus faces forward, employs the azimuth data and position data obtained through determination to acquire distance data and directional data relative to a predesignated position or a given position, and outputs these data as sound localization data.
   According to this arrangement, since the bearing data is obtained using a bearing detector, such as a geomagnetic sensor or a horizon sensor, and since the azimuth along which the main body of the apparatus faces forward, the azimuth data can be obtained without preparing the acceleration detector.
(4) The stereophonic sound control apparatus described in (3) comprises:
   a posture detector for detecting a posture,
   wherein the controller corrects the directional data based on posture data, obtained from the posture detector, representing the posture of the main body of the apparatus relative to the surface of the earth.
   According to this arrangement, when the present invention is applied for a mobile terminal, such as a mobile phone, the posture of the user of the mobile terminal can be obtained, and since the directional data is corrected based on the posture data, the accuracy of the directional data can be improved.
(5) The stereophonic sound control apparatus described in (1) further comprises:
   a blind spot detector for detecting a blind spot,
   wherein the controller obtains distance data and directional data indicating a distance and a direction to an object detected by the blind spot detector, and outputs these data as sound localization data.
   According to this arrangement, when the present invention is applied for a car navigation system, a blind spot, such as the rear or the side of a vehicle, can be detected, and the safety can be improved. Further, as an example blind spot detector, there is a human presence detection sensor.
(6) A stereophonic sound control apparatus comprises:
   an input unit for entering data, including audio data, for a plurality of channels;
   a controller for obtaining predesignated or given position data, for each channel indicated by data entered using the input unit, and calculating distance data and directional data, and for outputting these data as sound localization data; and
   a processor for performing a stereophonic sound process for the audio data, based on the localization data output by the controller.
   According to this configuration, the distance data and the directional data are obtained for each channel and are regarded as sound localization data, and the stereophonic sound process is performed for the audio data based on the localization data. Therefore, when a plurality of different sounds are entered, the individual sounds can be easily identified, and can be listened to without being mixed up.
(7) For the stereophonic sound control apparatus described in (6), the controller identifies audio data that are entered along the same channel using the input unit, obtains the predesignated or given position data not only for channel data but also for identification data, calculates distance data and directional data, and outputs these data as sound localization data.
   According to this arrangement, speech can be obtained to which localization data have been added for each identifier.
(8) For the stereophonic sound control apparatus described in (6), the input unit transmits or receives a radio wave, and the controller employs the directional intensity of a radio wave received by the input unit to identify the direction of a radio transmission source and to obtain directional data, and outputs the directional data as sound localization data.
   According to this arrangement, the bearing of a radio transmission source can be presented, and when the intensity of the radio wave output by the transmission source is multiplied by the sound volume, distance data can also be roughly presented.
(9) The stereophonic sound control apparatus described in one of (1) to (8) further comprises a selector,
   wherein the selector determines whether the stereophonic sound process should be performed for audio data obtained by the audio data acquisition unit.
   According to this arrangement, whether the stereophonic sound process should be performed can be selected.
(10) According to the stereophonic sound control apparatus described in (9), the selector employs the distance data to perform a determination.
   According to the arrangement, whether the stereophonic sound process should be performed can be determined based on the distance data.
(11) For the stereophonic sound control apparatus described in one of (1) to (10), the processor performs the stereophonic sound process for a case wherein the distance data indicates a distance equal to or shorter than the predesignated distance.
   According to this arrangement, the stereophonic sound process can be performed only for a case wherein the distance data indicates a distance equal to or shorter than the predesignated distance.
(12) For the stereophonic sound control apparatus described in one of (1) to (10), the processor performs the stereophonic sound process only for a case wherein the distance data indicates a distance that falls within a predesignated distance range.
   According to the present invention, the stereophonic sound process can be performed only for a case wherein the distance data indicates a distance that falls within the predesignated range.
(13) The stereophonic sound control apparatus described in one of (1) to (12) further comprises a display unit,
   wherein the controller employs the bearing data to provide a screen presentation on the display unit.
   According to this arrangement, an instruction for a direction can be issued not only using audio, not also using display.
(14) A stereophonic sound apparatus comprises:
   at least two loudspeakers;
   an audio data acquisition unit for obtaining audio data;
   a position data acquisition unit for obtaining position data;
   a controller for employing changes in position data, obtained by the position data acquisition unit, to specify an azimuth for a main body of the apparatus, for employing azimuth data and the position data to obtain distance data and directional data, indicating a distance and a direction to a predesignated position or a given position, and for outputting these data as localization data for sound;
   a processor for employing the localization data to perform a stereophonic sound process for the audio data obtained by the audio data acquisition unit; and
   an output unit for outputting, through the two loudspeakers, the audio data for which the processor has performed the stereophonic sound process.
   According to this configuration, since audio data is generated with directivity being provided for each channel, a plurality of different sounds that are entered can be easily identified, and can be listened to without being mixed up. Further, since stereophonic sounds can be provided using two loudspeakers, at the minimum, the rise in cost due to the introduction of the stereophonic sound apparatus of this invention can be minimized.
(15) The stereophonic sound apparatus described in (14) further comprises:
   an image pickup unit for obtaining an image of an object,
   wherein, based on an image entered using the image pickup unit, the controller recognizes a listener who listens to sounds through the loudspeakers, obtains distance data and directional data indicating a distance and a direction for the listener relative to the main body of the apparatus, and outputs these data as sound localization data.
   According to this arrangement, optimal stereophonic sounds can be provided for a listener who listens to sounds output through the loudspeakers.
(16) The stereophonic sound apparatus described in (14) or (15) further comprises a selector,
   wherein the selector determines whether the stereophonic sound process should be performed for audio data obtained by the audio data acquisition unit.
   According to this arrangement, whether the stereophonic sound process should be performed can be selected.
(17) According to the stereophonic sound apparatus described in (16), the selector employs the distance data to perform a determination.
   According to the arrangement, whether the stereophonic sound process should be performed can be determined based on the distance data.
(18) For the stereophonic sound apparatus described in one of (14) to (17), the processor performs the stereophonic sound process for a case wherein the distance data indicates a distance equal to or shorter than the predesignated distance.
   According to this arrangement, the stereophonic sound process can be performed only for a case wherein the distance data indicates a distance equal to or shorter than the predesignated distance.
(19) For the stereophonic sound apparatus described in one of (14) to (17), the processor performs the stereophonic sound process only for a case wherein the distance data indicates a distance that falls within a predesignated distance range.
   According to the present invention, the stereophonic sound process can be performed only for a case wherein the distance data indicates a distance that falls within the predesignated range.
(20) The stereophonic sound apparatus described in one of (14) to (19) further comprises a display unit,
   wherein the controller employs the bearing data to provide a screen presentation on the display unit.
   According to this arrangement, an instruction for a direction can be issued not only using audio, not also using display.
(21) A stereophonic sound control method comprises:
   an audio data acquisition step of obtaining audio data;
   a position data acquisition step of obtaining position data;
   a localization data acquisition step of employing changes in position data, obtained at the position data acquisition step, to specify an azimuth for a main body of the apparatus, employing azimuth data and the position data to obtain distance data and directional data, indicating a distance and a direction to a predesignated position or a given position, and outputting these data as localization data for sound; and
   a processing step of employing the localization data to perform a stereophonic sound process for the audio data obtained at the audio data acquisition step.

According to this method, since the azimuth data and the position data are employed to obtain the distance data and the directional data for the predesignated or given position, and since these data are output as sound localization data, an audio instruction for directions can be issued separately from visual data. Further, since stereophonic sounds can be provided using two loudspeakers, at the minimum, the rise in cost due to the introduction of the stereophonic sound apparatus of this invention can be minimized.

According to the present invention, directional data for speech are prepared by performing the stereophonic sound process, and separately from visual data, audio direction instructions, such as guidance, recognition and a warning, can be provided for the listener.

### BRIEF DESCRIPTION OF THE DRAWINGS

Fig. 1 is a schematic block diagram illustrating the configuration of a stereophonic sound apparatus according to a first embodiment of the present invention.

Fig. 2 is a block diagram illustrating the detailed arrangement of the processing unit of the stereophonic sound apparatus according to the first embodiment of the invention.

Fig. 3 is a diagram showing coordinate information, as example localization data, represented by a "bearing, an elevation and a distance" with a listener being located in the center.

Fig. 4 is a schematic block diagram illustrating the configuration of a stereophonic sound apparatus according to a second embodiment of the present invention.

Fig. 5 is a diagram for explaining the function of a stereophonic sound apparatus according to the second embodiment of the invention.

Fig. 6 is a block diagram illustrating the detailed arrangement of the processing unit of the stereophonic sound apparatus according to the second embodiment of the invention.

Fig. 7 is a schematic block diagram illustrating the configuration of a stereophonic sound apparatus according to a third embodiment of the present invention.

### DESCRIPTION OF THE PREFERRED EMBODIMENTS

The preferred embodiments of the present invention will now be described in detail while referring to the accompanying drawings.

### (First Embodiment)

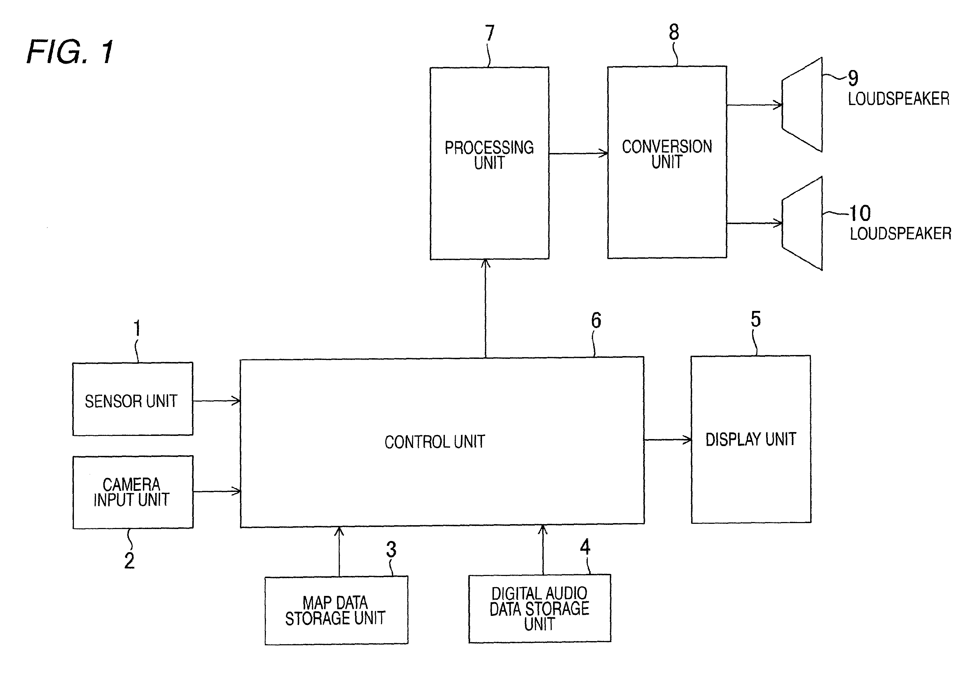

Fig. 1 is a schematic block diagram illustrating the configuration of a stereophonic sound apparatus according to a first embodiment of the present invention. While referring to Fig. 1, the stereophonic sound apparatus of this invention is a car navigation system for which the present invention is applied, and comprises a sensor unit 1, a camera input unit 2, a map data storage unit 3, a digital audio data storage unit 4, a display unit 5, a control unit 6, a processing unit 7, a conversion unit 8 and loudspeakers 9 and 10.

The sensor unit 1 includes a GPS (Global Positioning System) receiver, for receiving a GPS signal, and an acceleration sensor. The GPS receiver obtains position data while the acceleration sensor obtains acceleration data, and the obtained position data and acceleration data are transmitted to the control unit 6. The camera input unit 2 obtains camera video data by photographing an object, and transmits the camera video data to the control unit 6. The map data storage unit 3 stores map data. The digital audio data storage unit 4 stores digital audio data used to prepare a message for a direction instruction, such as guidance, recognition or a warning. The display unit 5 includes a liquid crystal display screen, and displays display data, including position data, received from the control unit 6.

The control unit 6 controls the individual sections of the apparatus, and includes a CPU (Central Processing Unit) (not shown), a nonvolatile memory, such as a ROM (Read Only Memory) in which a program for operating the CPU is stored, and a volatile memory, such as a RAM (Random Access Memory) that is employed for operations performed by the CPU. The control unit 6 obtains position data from the sensor unit 1 for specifying the location of the main body of the apparatus, obtains from the map data storage unit 3 map data representing that the main body of the apparatus is located in the center, obtains acceleration data from the sensor unit 1 to specify the azimuth along which the main body faces forward, employs the azimuth data and the position data to calculate distance information and directional information relative to a predesignated or given position, and outputs these data as localization data for sounds. This localization data is transmitted to the processing unit 7. Along with the localization data, digital audio data that is stored in the digital audio data storage unit 4 and that is consonant with the current situation is also transmitted to the processing unit 7.

Furthermore, the control unit 6 converts camera video data received from the camera input unit 2 into display data that can be displayed by the display unit 5, and transmits the display data to the display unit 5.

As another process, the control unit 6 may employ an image captured by the camera input unit 2 to identify a listener who is listening to sounds output through the loudspeakers 9 and 10, and may obtain data for the position of the listener and the azimuth for the listener, relative to the main body of the apparatus, to calculate distance data and directional data that it outputs as sound localization data to the processing unit 7.

When the processing unit 7 receives from the control unit 6 the sound localization data (distance data and azimuth data) and the digital audio data, and when the distance data indicates a distance equal to or shorter than a predesignated distance, the processing unit 7 performs a stereophonic sound process for the digital audio data based on the localization data that are received, and transmits the process results to the conversion unit 8. The stereophonic sound process may be performed for a case wherein the distance data indicates a distance that falls within a predesignated range, in addition to a case wherein the distance data indicates a distance equal to or shorter than a predesignated distance. Alternately, these limitations may be eliminated.

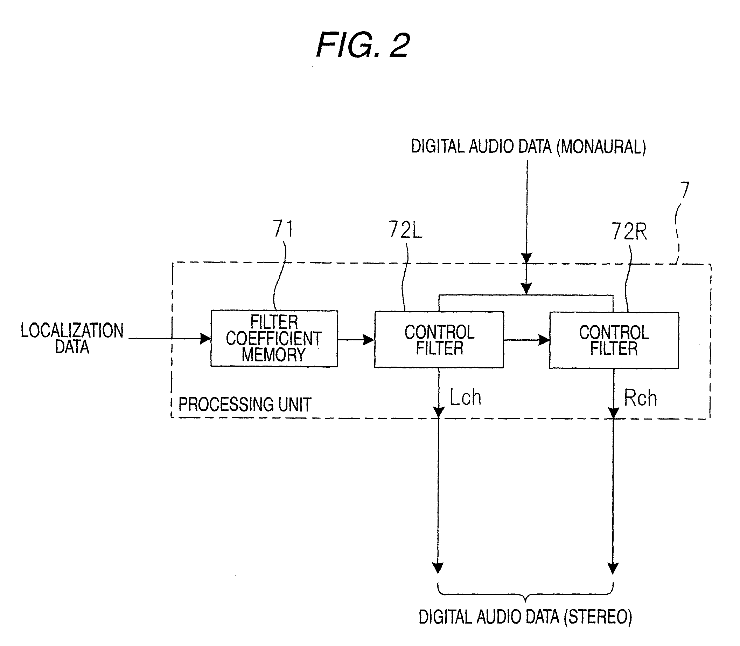

Fig. 2 is a block diagram showing the detailed arrangement of the processing unit 7. While referring to Fig. 2, the processing unit 7 includes: a filter coefficient memory 71, in which a plurality of filter coefficients are stored; and control filters 72L and 72R for left and right channels that employ filter coefficients correlated with bearing data, and that control the phase of digital audio data received from the digital audio data storage unit 4.

In the filter coefficient memory 71, filter coefficients are stored in a table in correlation with bearing data, and filter coefficients correlated with the bearing data are output. The filter coefficients that are read from the table are transmitted to the control filters 72L and 72R. In this case, the filter coefficient for channel L is transmitted to the control filter 72L for channel L, and the filter coefficient for channel R is transmitted to the control filter 72R for the R.

The control filters 72L and 72R employ the filter coefficients transmitted from the filter coefficient memory 71, and control the phase of the digital audio data that is obtained from the digital audio data storage unit 4 and is received via the control unit 6. The digital audio data obtained from the digital audio data storage unit 4 are monaural data, and are adjusted to the phase for channel L by the control filter 72L and to the phase for channel R by the control filter 72R.

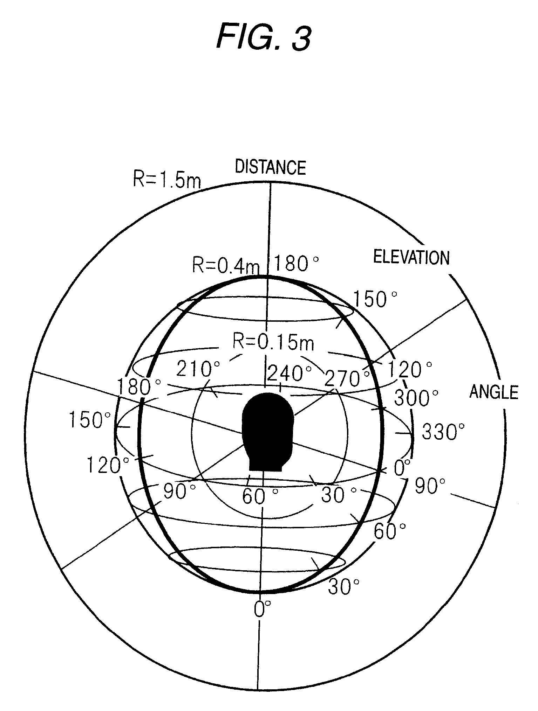

As shown in Fig. 3, the localization data input to the filter coefficient memory 71 is coordinate data represented by "a bearing, an elevation and a distance", with a listener being located in the center. The filter coefficients correlated with the localization data are read from the filter coefficient memory 71 and transmitted to the control filters 72L and 72R. It should be noted that a user, in addition to storing filter coefficients in advance in the filter coefficient memory 71 and transmitting them to the control filters 72L and 72R, may enter values directly to the control filters 72L and 72R. In this manner, the processing unit 7 localizes the monaural, digital audio data based on the localization data, and outputs stereo, digital audio data.

The conversion unit 8 includes a D/A converter (not shown), converts digital audio data received from the processing unit 7 into analog audio signals, and drives the loudspeakers 9 and 10. The loudspeakers 9 and 10 are arranged to obtain stereophonic effects.

The sensor unit 1 and the control unit 6 respectively serve as a position data acquisition unit and an acceleration detector. The camera input unit 2 corresponds to an image pickup unit, and the digital audio data storage unit 4 and the control unit 6 constitute an audio data acquisition unit. The control unit 6 also corresponds to a controller and the processing unit 7 corresponds to a processor. Further, the sensor unit 1, the digital audio data storage unit 4, the control unit 6, the processing unit 7 and the conversion unit 8 constitute a stereophonic sound control apparatus.

The operation of the stereophonic sound apparatus of the above arrangement will now be described. The control unit 6 obtains position data and angle data from the sensor unit 1. Then, the control unit 6 employs the angle data to determine the azimuth along which the main body of the apparatus moved, or is currently moving, and employs the azimuth data and position data obtained through determination and calculates distance data and directional data relative to a predesignated position or a given position, and outputs these data as sound localization data to the processing unit 7. Furthermore, from the digital audio data storage unit 4, the control unit 6 reads digital audio data that is optimal for the current situation, such as guidance or recognition of a direction, or a warning, and transmits the audio data to the processing unit 7.

When the processing unit 7 receives localization data and relative digital audio data from the control unit 6, the processing unit 7 performs a stereophonic sound process for the digital audio data based on the localization data, and transmits the results to the conversion unit 8. That is, the processing unit 7 reads filter coefficients from the filter coefficient memory 71 in correlation with localization data for the coordinate system that is represented by using "a bearing, an elevation and a distance", with a listener being located in the center, and transmits the filter coefficients to the control filters 72L and 72R. In this case, the filter coefficient for channel L is transmitted to the control filter 72L for channel L, while the filter coefficient for channel R is transmitted to the control filter 72R for channel R.

Then, the control filter 72L employs the filter coefficient for channel L to control the phase for the digital audio data, and the control filter 72R employs the filter coefficient for channel R to control the phase for the digital audio data. Thereafter, the digital audio data for channel L and channel R, for which the phase is controlled, are transmitted as stereo digital audio data to the conversion unit 8. The conversion unit 8 converts the stereo digital audio data received from the processing unit 7 into analog audio data, and drives the loudspeakers 9 and 10. Thus, stereophonic sounds are released through the loudspeakers 9 and 10. Since the stereophonic sounds have directivity, audio direction instruction is enabled, instead of using a display. It should be noted that since the stereophonic sound apparatus of this embodiment is a car navigation system for which the present invention is applied, a listener, naturally, is a driver.

As described above, according to the stereophonic sound apparatus of this embodiment, the acceleration data is obtained by the sensor unit 1, which can obtain position data and detect acceleration, and the azimuth along which the main body of the apparatus was moved, or is moving, is determined. Then, the azimuth data and the position data obtained through a determination are employed, and the distance data and the directional data relative to the predesignated or given position are calculated, and while these data are regarded as localization data, the stereophonic sound process is performed for the digital audio data to generate digital audio data having directivity. Then, the digital audio data that is generated is converted into analog audio data, and the two loudspeakers 9 and 10 are driven to output stereophonic sounds. Through this processing, instead of using the visual form that must be read from the screen of the display unit 5, the audio form can be used to provide a direction instruction (guidance, recognition or warning) that a listener will quickly understand. Especially since information for the directions through 360 degrees can be included in audio data by performing the stereophonic sound process, the direction instructions will not simply be provided to the left or to the right, but in all directions. In addition, since distance, for example, can be instructed along with direction, a user (listener) can obtain necessary information, in a moment, merely by listening. Moreover, since only a minimum two loudspeakers are required, the cost rise due to the introduction of the stereophonic sound apparatus of the invention can be minimized.

Incidentally, a conventional car navigation system provides a direction instruction using merely a display and a speech, so that in a case, for example, where a guidance for making a left turn further down a street is to be issued, the turn and the distance to the turn are presented on the display, while a speech, "Make a left turn further down this street", is provided by the loudspeakers. Subsequently, the driver must view the display to obtain detailed information for the turn and the distance to the turn; however, since at much the same time actual traffic conditions must be visually confirmed, the driver may have time to view only part or none of the turn information, and may miss the turn. On the other hand, according to the invention, visual confirmation is substantially not required, so that little or no time is needed to fully grasp the information that is provided, and a situation where a driver obtains inadequate information does not occur.

In this embodiment, acceleration data is obtained to determine an azimuth. However, since the azimuth can be roughly determined based on a temporal change in the position data, the acceleration sensor included in the sensor unit 1 is not necessarily required. When position data is employed, however, the following process is performed. The control unit 6 specifies the azimuth for the main body of the apparatus based on the change in the position data that is obtained by the sensor unit 1, employs the azimuth and the position data obtained by the sensor unit 1 to calculate distance data and directional data relative to a predesignated or given position, and while these data are regarded as sound localization data, performs a stereophonic sound process for the digital audio data that is obtained from the digital audio data storage unit 4.

Further, the determination of the azimuth can also be performed using the bearing sensor (a bearing detector (not shown)) that detects a vehicle bearing. That is, the control unit 6 obtains bearing data from the bearing sensor, and determines the azimuth along which the main body of the apparatus faces forward. Then, based on the azimuth data and the position data obtained through the determination, the control unit 6 calculates distance data and directional data relative to a predesignated or given position, and while these data are regarded as sound localization data, performs a stereophonic sound process for the digital audio data that are obtained from the digital audio data storage unit 4. Further, the accuracy of the directional data can be increased by using a posture detector (not shown), such as a geomagnetic sensor or a horizon sensor. That is, the control unit 6 obtains posture data, from the posture detection sensor, that indicates the posture of the main body of the apparatus relative to the surface of the earth, and corrects the directional data based on the obtained posture data.

Further, in this embodiment, the sensor unit 1 obtains position data and acceleration data. When a sensor (a blind spot detector (not shown)) for detecting the presence of a person at the rear or to the side of a vehicle is additionally mounted on the sensor unit 1, the position of a person present at the rear or to the side of the vehicle can be detected. When this arrangement is applied for a vehicle, such as an automobile, an audio warning that there is a person to the rear of the vehicle, or in another location where in danger of being struck, is released through the loudspeakers 9 and 10 in order to draw the driver's attention in that direction. In this case, the control unit 6 obtains the distance data and the directional data relative to the presence of the person or object captured by the person presence sensor, and transmits these data as sound localization data to the processing unit 7. When the unit for monitoring the rear and the side of the vehicle is additionally provided, unlike in the visual case, information is received without especially paying attention. Therefore, the recognition speed is increased, and safe driving is ensured.

In addition to acquisition of the position of a person using the human presence detection sensor, position data for another party a user is conversing with on the phone can be obtained by GPS. Using this position data, speech can be output from the location on the screen of the phone occupied by an image of the other party. If the sounds heard at this time are those of the voice of the party the user is conversing with, the sensation is similar to that were the other party person actually present.

Furthermore, in this embodiment, the present invention has been applied for a car navigation system; however, the same effects can be obtained when the present invention is applied for a mobile terminal, such as a mobile phone. In this case, instead of the acceleration sensor, a geomagnetic sensor or a horizon sensor can be employed as the sensor unit 1. However, since the posture of a mobile terminal is constantly changed in accordance with the angle at which a user holds the mobile terminal, the camera input unit 2 can be employed to calculate the posture of the motile terminal relative to the surface of the earth, and based on the results, the directional data can be corrected.

Further, for the acquisition of the correlation of a mobile terminal and a person, assuming that there exists a condition, for example, during which the face of a person should constantly be directed toward the mobile terminal, the characteristics of the face are extracted through image processing, and based on the positioning and the size of the eyes, the posture of the mobile terminal relative to the person can be roughly obtained. So long as this posture data can be obtained, then, the position data for the mobile terminal can be corrected using the posture data, and an instruction directing that a person's image be positioned in the center of a screen is enabled. However, if a condition employed as a premise, for example, is that a person should stand correctly, an acceleration sensor or a horizon sensor must be mounted on a mobile terminal in order to accurately correct the directional bearing of a case wherein the condition is not satisfied. Of course, although the provision of sensors is arbitrary, regardless of whether for a mobile terminal or for a car navigation system, appropriate sensors should be employed.

In addition, two loudspeakers, i.e., the loudspeakers 9 and 10 have been prepared for this embodiment. However, the number of loudspeakers is not limited to two, and more than two may be employed in order to obtain stereophonic effects. However, since many loudspeakers increase manufacturing costs, this should be taken into account.

Moreover, in this embodiment, an optional function is not included for arbitrarily selecting the use of the function whereby a stereophonic sound process is performed for audio data obtained by the digital audio data storage unit 4 and the control unit 6. However, the optional function for selecting whether or not this function is to be employed may be provided on a menu screen or a system setup screen for starting navigation. Or instead, this function may be selected manually, or automatically based on distance data.

Also, in this embodiment, the sensation of distance is represented using a transverse angle, and a volume and a frequency property; however, an elevation angle may be employed.

### (Second Embodiment)

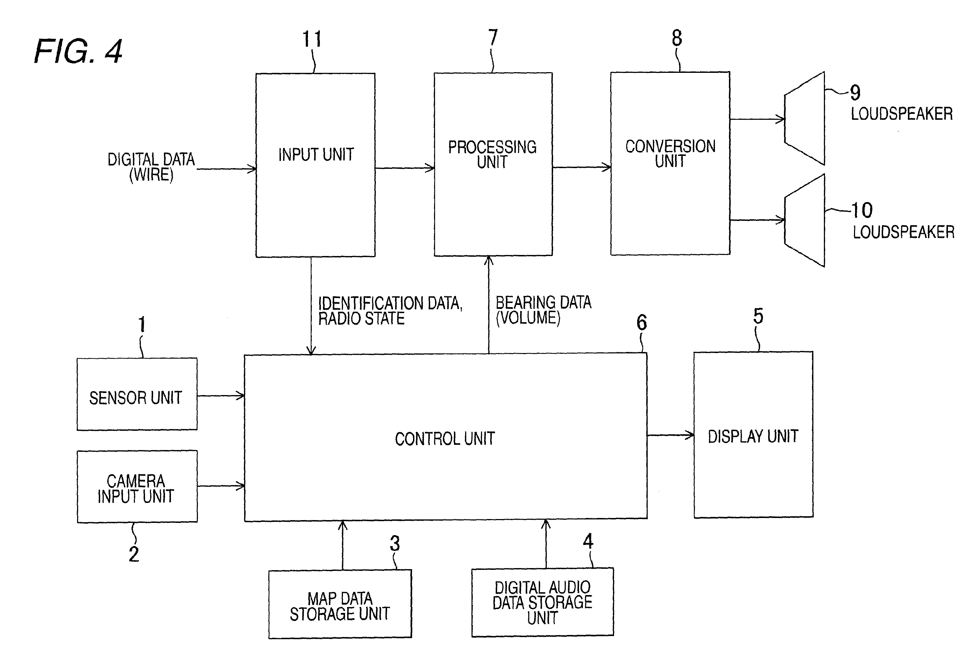

Fig. 4 is a schematic block diagram illustrating a stereophonic sound apparatus according to a second embodiment of the present invention. While referring to Fig. 4, the stereophonic sound apparatus for this embodiment is a mobile terminal, such as a mobile phone, for which the present invention is applied. In addition to the same configuration and functions as the first embodiment, the stereophonic sound apparatus includes an input unit (input means) 11 that receives data, including audio data, for a plurality of channels by wire. For communication using packets in a time-dividing manner, each packet consists of an "identifier" and correlated "audio data". A control unit 6 obtains predesignated or given position data for each channel for data that is entered by the input unit 11, and calculates distance data and directional data. Then, the control unit 6 outputs these data as sound localization data. Furthermore, the control unit 6 identifies audio data entered via the same channel by the input unit 11, obtains position data that is predesignated or given not only for channel data but also for identification data, calculates distance data and directional data, and outputs these data as sound localization data. Thus, sounds produced using stereophonic data can be obtained for individual identifiers. That is, speech is released, while different directions for individual identifiers are multiplexed. Therefore, a listener can identify a plurality of sounds substantially without them being mixed up.

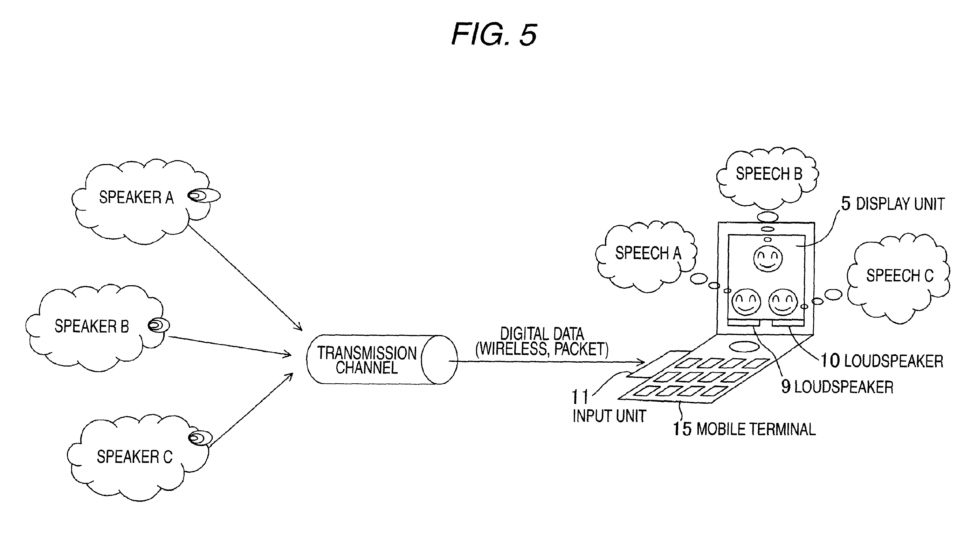

The directional bearing data may be multiplexed with data entered for the input unit 11. Further, speech may be generated by exchanging character data and converting the data. Also, the bearing data may be displayed on the display unit 5, so that detailed information, such as a student name and the student's class, obtained from identification data, may be additionally provided to more easily identify the individual. This state is shown in Fig. 5. In Fig. 5, the speech of speakers A, B and C are multiplexed, and the obtained digital data is delivered as a radio wave to a mobile terminal 15. This radio wave is received by the input unit 11, and since the digital data is delivered as a packet, the data is separated into data for the individual speakers. Assuming that left position data is provided for speaker A, upper position data for speaker B and right position data for speaker C, the stereophonic sound process is performed for separated sounds, so that the speech of speaker A is located on the left, the speech of speaker B is located on the top, and the speech of speaker C is located on the right. Furthermore, a processing unit 7A provides a display based on the localization data for the individuals. As a result, as shown in Fig. 5, the image of speaker A is displayed in the lower left area of the screen for the display unit 5, the image of speaker B is displayed in the upper center, and the image of the speaker C is displayed in the lower right area.

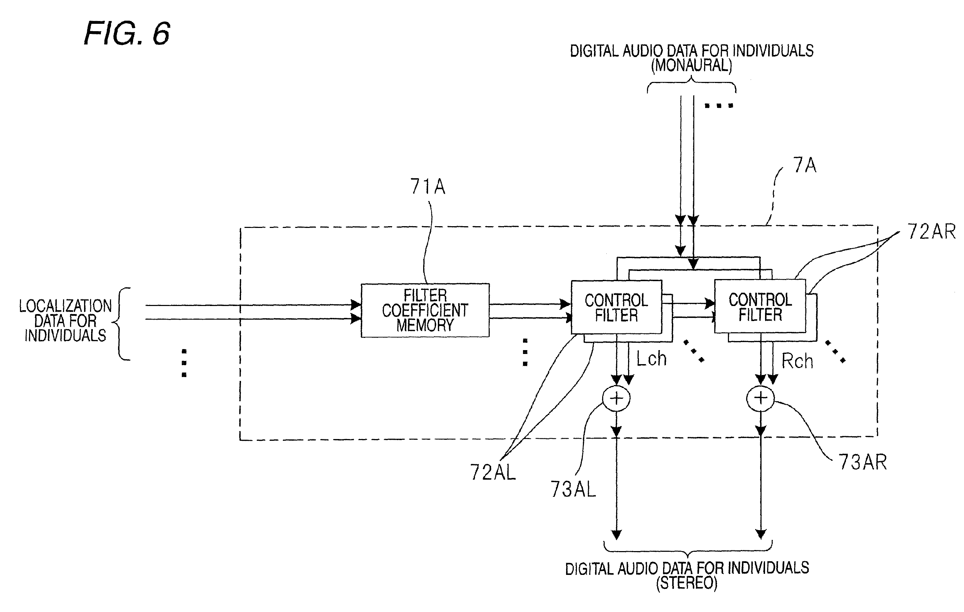

The processing unit 7A includes a plurality of control filters for channel L and channel R for performing a plurality of sets of audio data at the same time. For this embodiment, assume that there are control filters provided that are equivalent in number to three speakers A to C. As shown in Fig. 6, the processing unit 7A includes a filter coefficient memory 71 A, three control filters 72AL for channel L, three control filters 72AR for channel R, an adder 73AL for adding the outputs of the three control filters 72AL, and an adder 73AR for adding the outputs of the three control filters 72AR.

In the filter coefficient memory 71A, filter coefficients are stored for the individual speakers in a table in correlation with localization data, and filter coefficients are output in consonance with the input localization data. In this embodiment, since there are three speakers A to C, filter coefficients for channels L and R for the speaker A, filter coefficients for channels L and R for the speaker B and filter coefficients for channels L and R for the speaker C are output. Of the filter coefficients from the filter coefficient memory 71 A that are output for the channels L and R, the filter coefficients for channels L and R that are correlated with the speaker A are transmitted to the first control filter 72AL and 72AR, the filter coefficients for the channels L and R that are correlated with the speaker B are transmitted to the second control filter 72AL and 72AR, and the filter coefficients for channels L and R that are correlated with the speaker C are transmitted to the third control filter 72AL and 72AR.

The individual control filters 72AL and 72AR employ the filter coefficients from the filter coefficient memory 71 A to control the phases of the input digital audio data for the individual speakers. Digital audio data that enters the processing unit 7A is monaural, and is adjusted to the phase of channel L by the control filters 72AL and to the phase of channel R by the control filters 72AR. As previously described while referring to Fig. 3, the localization data transmitted to the filter coefficient memory 71A is coordinate data represented by "a bearing, an elevation and a distance" with the listener being located in the center. Not only are the filter coefficients stored in advance in the filter coefficient memory 71 A and transmitted to the control filters 72AL and 72AR, but also values may be directly entered by a user. The adder 73AL adds together the outputs of the control filters 72AL for the channel L and outputs the result, and the adder 73AR adds together the outputs of the control filters 72AR for the channel R and outputs the result. In this manner, based on the localization data for the individuals, the processing unit 7A performs the localization process for monaural digital audio data, and outputs stereo digital audio data.

Referring again to Fig. 4, in accordance with the individual position data, the control unit 6 displays data as identifiers on the display unit 5. For example, for a videophone, the control unit 6 displays image data at a designated location. It should be noted that a user may employ the display unit 5 to manually enter bearing data for each identifier. For example, while watching the display, the user positions the identifier at an arbitrary display position. Thus, bearing data can be provided in accordance with a method favored by a user.

Furthermore, there is a case wherein audio data entered for the input unit 11 does not include an identifier, and is simply multiplexed data to which sounds have been added. Such example data are data obtained when speeches by a plurality of speakers are collected using a single microphone at a video conference. Assuming that this audio data is transmitted, the control unit 6 analyzes the audio data by performing voice recognition, and generates bearing data. Through this process, speeches can be identified in a pseudo manner. As described above, also using the mobile terminal, a speech can be reproduced as though the individual were actually present.

It should be noted that the sensor unit 1, the digital audio data storage unit 4, the control unit 6, the processing unit 7A, the conversion unit 8 and the input unit 11 constitute a stereophonic sound control apparatus.

According to the stereophonic sound apparatus of this embodiment, based on the bearing data, a stereophonic sound process is performed for the individual sets of audio data for which an identifier is provided, and audio data having directivity is generated. Therefore, the listener can identify a plurality of sounds without them being mixed up. Therefore, when a user talks to a plurality of parties on the phone at the same time, the user can hear the voices of the parties at different positions, and can identify these voices without becoming confused.

### (Third Embodiment)

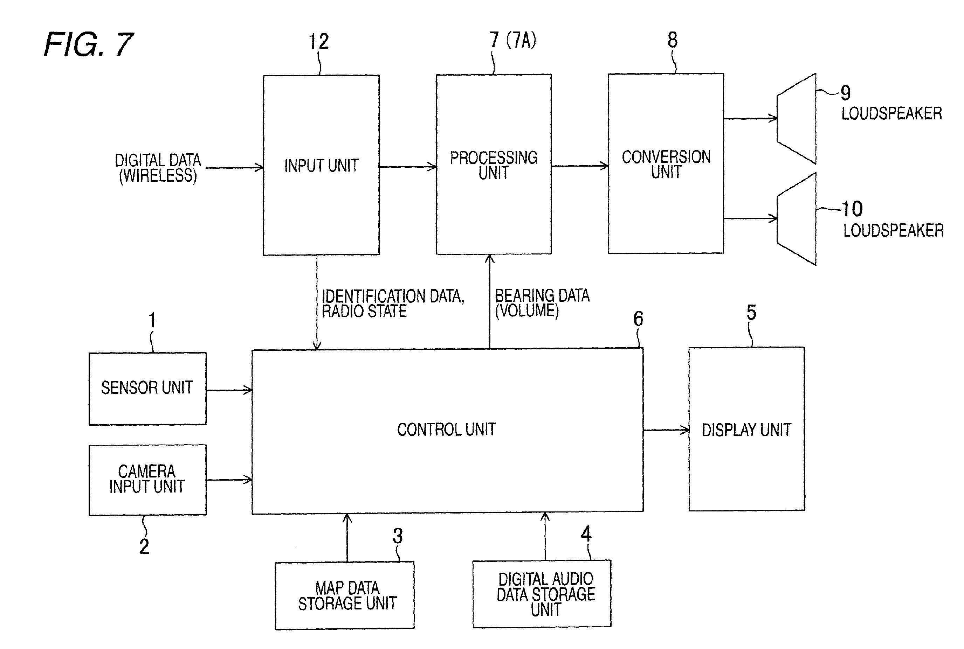

Fig. 7 is a schematic block diagram illustrating a stereophonic sound apparatus according to a third embodiment of the present invention. While referring to Fig. 7, the stereophonic sound apparatus of this embodiment is a mobile terminal, such as a mobile phone, for which the present invention is applied. In addition to the configuration and the function that correspond to the first embodiment, the stereophonic sound apparatus includes an input unit 12 that has a function for externally fetching digital data by radio, i.e., a function for receiving radio waves transmitted from by radio transmission source.

A control unit 6 receives, every specific period of time, the radio state together with digital audio data that are received by the input unit 12, and records the radio state. Then, the control unit 6 employs the radio state and a posture change of the mobile terminal to determine a radio intensity and a bearing, i.e., to determine the directional intensity of the received radio wave. Following this, based on the directional intensity, the control unit 6 obtains the direction of the radio transmission source and calculates directional data, and outputs the directional data as sound localization data. It should be noted that the input unit 12 may include a transmission function, whereby a detection radio wave is reversely transmitted to read the radio reception intensity.

It should be noted that the sensor unit 1, the digital audio data storage unit 4, the control unit 6, the processing unit 7 (or 7A), the conversion unit 8 and the input unit 11 constitute a stereophonic sound control apparatus.

As described above, according to the stereophonic sound apparatus of this embodiment, a radio wave (digital data) transmitted by a radio transmission source is received every specific period of time, and the directional intensity of the received radio wave is determined by referring to the posture change for the mobile terminal. Therefore, the bearing of the radio transmission source can be presented to a user, and when the reception intensity of the radio transmission source is multiplied by the sound volume, rough distance data can also be presented.

In this embodiment as well as in the first embodiment, one set of audio data has been processed. However, as in the second embodiment, a plurality of sets of audio data may be processed. In this case, the processing unit 7A is employed.

The present invention provides the following effects. When a stereophonic sound process is performed for a specific speech, a direction can be easily followed or identified, or useful data, such as a warning, can be obtained as auxiliary information. The present invention can be applied for a car navigation system or a mobile phone having a navigation function.

## Claims

1. A stereophonic sound control apparatus, comprising:
an audio data acquisition unit for obtaining audio data;
a position data acquisition unit for obtaining position data;
a controller for employing changes in position data, obtained by the position data acquisition unit, to specify an azimuth for a main body of the apparatus, for employing azimuth data and the position data to obtain distance data and directional data, indicating a distance and a direction to a predesignated position or a given position, and for outputting these data as localization data for sound; and
a processor for employing the localization data to perform a stereophonic sound process for the audio data obtained by the audio data acquisition unit.

2. The stereophonic sound control apparatus according to claim 1, further comprising:
an acceleration detector for detecting acceleration,
wherein the controller obtains acceleration data from the acceleration detector and determines an azimuth along which the main body of the apparatus has moved or is currently moving, employs the azimuth data and the position data obtained through a determination performed to obtain distance data and directional data indicating a distance and a direction to a predesignated position or a given position, and outputs these data as sound localization data.

3. The stereophonic sound control apparatus according to claim 1, further comprising:
a bearing detector for detecting a directional bearing,
wherein the controller obtains bearing data from the bearing detector to determine data for an azimuth along which the main body of the apparatus has moved, or is currently moved, employs the azimuth data and position data obtained through determination to acquire distance data and directional data relative to a predesignated position or a given position, and outputs these data as sound localization data.

4. The stereophonic sound control apparatus according to claim 3, further comprising:
a posture detector for detecting a posture,
wherein the controller corrects the directional data based on posture data, obtained from the posture detector, representing the posture of the main body of the apparatus relative to the surface of the earth.

5. The stereophonic sound control apparatus according to claim 1, further comprising:
a blind spot detector for detecting a blind spot,
wherein the controller obtains distance data and directional data indicating a distance and a direction to an object detected by the blind spot detector, and outputs these data as sound localization data.

6. A stereophonic sound control apparatus comprising:
an input unit for entering data, including audio data, for a plurality of channels;
a controller for obtaining predesignated or given position data, for each channel indicated by data entered using the input unit, and calculating distance data and directional data, and for outputting these data as sound localization data; and
a processor for performing a stereophonic sound process for the audio data, based on the localization data output by the controller.

7. The stereophonic sound control apparatus according to claim 6, wherein the controller identifies audio data that are entered along the same channel using the input unit, obtains the predesignated or given position data not only for channel data but also for identification data, calculates distance data and directional data, and outputs these data as sound localization data.

8. The stereophonic sound control apparatus according to claim 6, wherein the input unit transmits or receives a radio wave, and the controller employs the directional intensity of a radio wave received by the input unit to identify the direction of a radio transmission source and to obtain directional data, and outputs the directional data as sound localization data.

9. The stereophonic sound control apparatus according to claim 1, further comprising a selector,
wherein the selector determines whether the stereophonic sound process should be performed for audio data obtained by the audio data acquisition unit.

10. The stereophonic sound control apparatus according to claim 9, wherein the selector employs the distance data to perform a determination.

11. The stereophonic sound control apparatus according to claim 1, wherein the processor performs the stereophonic sound process for a case wherein the distance data indicates a distance equal to or shorter than the predesignated distance.

12. The stereophonic sound control apparatus according to claim 1, wherein the processor performs the stereophonic sound process only for a case wherein the distance data indicates a distance that falls within a predesignated distance range.

13. The stereophonic sound control apparatus according to claim 1, further comprising a display unit,
wherein the controller employs the bearing data to provide a screen presentation on the display unit.

14. A stereophonic sound apparatus comprising:
at least two loudspeakers;
an audio data acquisition unit for obtaining audio data;
a position data acquisition unit for obtaining position data;
a controller for employing changes in position data, obtained by the position data acquisition unit, to specify an azimuth for a main body of the apparatus, for employing azimuth data and the position data to obtain distance data and directional data, indicating a distance and a direction to a predesignated position or a given position, and for outputting these data as localization data for sound;
a processor for employing the localization data to perform a stereophonic sound process for the audio data obtained by the audio data acquisition unit; and
an output unit for outputting, through the two loudspeakers, the audio data for which the processor has performed the stereophonic sound process.

15. The stereophonic sound apparatus according to claim 14, further comprising:
an image pickup unit for obtaining an image of an object,
wherein, based on an image entered using the image pickup unit, the controller recognizes a listener who listens to sounds through the loudspeakers, obtains distance data and directional data indicating a distance and a direction for the listener relative to the main body of the apparatus, and outputs these data as sound localization data.

16. The stereophonic sound apparatus according to claim 14, further comprising a selector,
wherein the selector determines whether the stereophonic sound process should be performed for audio data obtained by the audio data acquisition unit.

17. The stereophonic sound apparatus according to claim 16, wherein the selector employs the distance data to perform a determination.

18. The stereophonic sound apparatus according to claim 14, wherein the processor performs the stereophonic sound process for a case wherein the distance data indicates a distance equal to or shorter than the predesignated distance.

19. The stereophonic sound apparatus according to claim 14, wherein the processor performs the stereophonic sound process only for a case wherein the distance data indicates a distance that falls within a predesignated distance range.

20. The stereophonic sound apparatus according to claim 14, further comprising a display unit,
wherein the controller employs the bearing data to provide a screen presentation on the display unit.

21. A stereophonic sound control method comprising:
an audio data acquisition step of obtaining audio data;
a position data acquisition step of obtaining position data;
a localization data acquisition step of employing changes in position data, obtained at the position data acquisition step, to specify an azimuth for a main body of the apparatus, employing azimuth data and the position data to obtain distance data and directional data, indicating a distance and a direction to a predesignated position or a given position, and outputting these data as localization data for sound; and
a processing step of employing the localization data to perform a stereophonic sound process for the audio data obtained at the audio data acquisition step.
